# FASCICULE DE BREVET EUROPEEN

(11) **EP 2 846 081 B1**
(45) Date de publication et mention de la délivrance du brevet: **19.08.2020**
(21) Numéro de dépôt: 14184161.9
(22) Date de dépôt: 09.09.2014
(51) Int. Cl.: B60Q 1/00, B60Q 1/28, F21S 41/147, F21S 41/20, F21W 102/13, F21W 103/55

(54) **Dispositif d'éclairage et de signalisation d'un véhicule**
Vorrichtung zur Beleuchtung und Signalisierung für Fahrzeuge
Lighting and signalling device of a vehicle

(30) Priorité: 09.09.2013 FR 1358656
(43) Date de publication de la demande: 11.03.2015
(73) Titulaire: VALEO VISION, 93012 Bobigny Cedex (FR)
(72) Inventeur: Thabet, Ziyed, 75015 Paris (FR)

(56) Documents cités:
- EP-A1- 2 143 994
- EP-A1- 2 363 320
- EP-A2- 2 058 585
- WO-A1-2010/032143
- US-A1- 2010 060 127

## Description

L'invention se rapporte à un module d'émission de lumière de dispositif d'éclairage et/ou de signalisation d'un véhicule. Généralement un véhicule, et notamment un véhicule automobile, est doté d'une source d'éclairage destinée à illuminer par temps sombre une route, afin de permettre à un conducteur de guider son véhicule avec sécurité, et une source lumineuse de signalisation de plus faible intensité, prévue pour informer les autres conducteurs de la présence dudit véhicule en plein jour. Plus spécifiquement, l'invention porte sur un dispositif d'éclairage et de signalisation amélioré d'un véhicule.

Habituellement la fonction de signalisation du véhicule est réalisée au moyen de feux de circulation diurne, ou feux de position diurnes ou DRL (de l'anglais *Daytime Running Lamps),* qui est un dispositif impliquant une lumière blanche placée à l'avant du véhicule et qui est allumé lorsque le véhicule se déplace vers l'avant, afin d'accroître la visibilité du véhicule dans des conditions de lumière de jour.

Un tel dispositif de signalisation est actuellement réalisé sous différentes formes :
- soit une pluralité de diodes électroluminescentes ou LED (de l'anglais *Light Emitting Diode)* disposées selon une géométrie particulière,
- soit un guide de lumière,
- soit des miroirs et/ou des lentilles.

Ce dispositif est indépendant et vient s'ajouter au dispositif d'éclairage prévu pour éclairer la route. Il en résulte que la coexistence de ces deux dispositifs distincts entraine un encombrement important au sein du véhicule, et en particulier au niveau des projecteurs avant dans lesquels ils sont généralement placés. De plus, puisque chacun des ces deux dispositifs se fonde sur un réflecteur qui lui est spécifique, il est nécessaire de fabriquer deux réflecteurs distincts, dont le temps d'usinage global est long et donc plus coûteux. Enfin, l'éclairage de signalisation produit le jour est différent de celui qui est généré la nuit pour éclairer la route, si bien que l'éclairage du véhicule ne constitue pas un signe distinctif et reconnaissable en toutes circonstances, permettant d'identifier le modèle et/ou la marque dudit véhicule.

WO 2010/032143 A1 décrit un module d'éclairage comportant un réflecteur ainsi que des diodes électroluminescente. Une diode centrale permet par exemple la réalisation d'un phare antibrouillard. Deux diodes situées de part et d'autre de la diode centrale et équipée chacune d'un élément diffusant permet de réaliser un feu diurne.

Les documents US 2010/0060127 A1 et EP 2 363 320 A1 décrivent d'autres modules bi-fonction utilisant chacun un réflecteur associé à plusieurs diodes.

L'invention a pour objet un dispositif d'éclairage d'un véhicule, comprenant une cavité délimitée par un réflecteur, ladite cavité comprenant une source lumineuse principale apte à éclairer une route.

Cette cavité contient également au moins une source lumineuse secondaire permettant de réaliser au moins partiellement une signalisation du véhicule le jour. Les sources principales et secondaires coopèrent avec le même réflecteur pour assurer leurs fonctions d'éclairage et de signalisation. Les fonctions d'éclairage comprennent la fonction d'éclairage longue portée, encore appelée éclairage route ou feu route. Dans le cadre d'un dispositif d'éclairage selon l'invention, il doit également être agencé pour pouvoir réfléchir les rayons en provenance de la source lumineuse secondaire, au-dessus de ladite coupure. En effet, pour que le véhicule soit aperçu de loin, les rayons issus de la source lumineuse secondaire doivent être majoritairement dirigés vers le haut, en étant toutefois faiblement intenses pour ne pas également éblouir les autres usagers de la route. Il est à noter que les sources lumineuses principale et secondaire sont fixes, et non orientables sur commande.

Dans le cadre d'un éclairage longue portée, ou faisceau route, permettant généralement d'éclairer à une portée de 600 mètres, la surface réfléchissante du réflecteur a une forme telle que le faisceau formé par les rayons lumineux réfléchis par la source principale placée à son foyer, présente une intensité maximum proche de l'axe optique du projecteur et généralement d'environ 40500 candelas (Cd). Un inconvénient de cette forme est que lorsque les sources lumineuses secondaires sont allumées pour réaliser la fonction DRL, le faisceau généré présentera également une intensité maximum forte, malgré l'extinction de la source principale et la défocalisation de ces sources lumineuses secondaires.

Dans l'art antérieur, un tel inconvénient ne se produit pas puisque le module DRL étant séparé des modules d'éclairage de la route, le réflecteur est spécifiquement conçu pour les sources lumineuses du DRL. Le réflecteur est alors conçu pour ne pas avoir un point d'intensité maximal avec une intensité aussi élevée. Il est en effet courant dans la conception d'un faisceau de travailler les surfaces qui permettent de réfléchir ou réfracter le faisceau, comme les réflecteurs ou les lentilles, par exemple en sectorisant le réflecteur pour obtenir différentes directions de déviation des rayons lumineux. La défocalisation des sources permet également de légèrement diminuer l'intensité du point d'intensité maximale du faisceau.

De manière surprenante, les inventeurs de la présente demande se sont aperçu qu'en utilisant une pièce permettant d'étaler le faisceau de la source lumineuse secondaire sur le réflecteur, le faisceau secondaire restait apte à remplir sa fonction de signalisation, en particulier un faisceau DRL, mais avec un point d'intensité maximale dont l'intensité était fortement diminuée, sans pour autant diminuer le flux lumineux total du faisceau.

Ainsi l'invention est définie dans la revendication 1 et a pour objet un module d'émission de lumière de dispositif d'éclairage et/ou de signalisation d'un véhicule, comprenant :
- un réflecteur ayant un foyer,
- une source lumineuse principale placée au foyer du réflecteur et agencée avec le réflecteur de manière à ce que les rayons qu'elle émet soient réfléchis par le réflecteur, de manière à former un premier faisceau lumineux présentant un point d'intensité maximum, notamment dans l'axe optique,
- au moins une source lumineuse secondaire placée à distance du foyer du réflecteur,
- une pièce d'étalement apte à être traversée par la lumière et à étaler les rayons qui la traversent, positionnée entre la ou les source(s) lumineuse(s) secondaire(s) et le réflecteur,
le réflecteur, la ou les source(s) lumineuse(s) secondaire(s) et la pièce d'étalement étant agencés de manière à ce que les rayons émis par la ou les source(s) lumineuse(s) secondaire(s) traversent la pièce d'étalement puis soient réfléchis par le réflecteur, de manière à former un deuxième faisceau lumineux.

Ainsi l'étalement des rayons émis par la ou les source(s) lumineuse secondaire(s) sur le réflecteur avant réflexion par ce dernier, va créer un faisceau secondaire avec une répartition améliorée, telle que le point d'intensité maximale aura une intensité beaucoup moins élevée qu'en l'absence de la pièce d'étalement. Par exemple, l'étalement des rayons émis par la ou les source(s) lumineuse secondaire(s) va créer un faisceau DRL avec non seulement une forme propre à celle d'un DRL mais également une répartition améliorée, telle que le point d'intensité maximale aura une intensité beaucoup moins élevée qu'en l'absence de la pièce d'étalement.

Ici la source principale est focalisée et la ou les sources secondaires sont défocalisées.Le terme « focaliser » signifie être placé au niveau du foyer du réflecteur. Préférentiellement, chaque source lumineuse secondaire est défocalisée. Le terme « défocaliser » signifie être placé en dehors du foyer du réflecteur.

Selon une réalisation de l'invention, la surface réfléchissante du réflecteur est telle que les rayons lumineux partant de ce foyer et réfléchis par ce réflecteur sont contenus dans des plans parallèles entre eux, notamment des plans horizontaux. Selon un exemple non limitatif, les rayons lumineux partant de ce foyer et réfléchis par ce réflecteur sont parallèles entre eux.

Selon une réalisation de l'invention, le premier faisceau est un faisceau route et le deuxième faisceau est un faisceau de position diurne.

Selon une réalisation de l'invention, chaque source lumineuse principale est agencée par rapport au réflecteur, de manière à ce que :
- la source lumineuse principale génère en association avec le réflecteur de générer le premier faisceau lorsque chaque source lumineuse secondaire est éteinte, et
- la ou les source(s) lumineuse(s) secondaire(s) génèrent en association avec le réflecteur une fonction de signalisation du véhicule de jour, lorsque la source principale est éteinte.

Selon l'invention, le deuxième faisceau lumineux présente un point d'intensité maximum dont l'intensité est inférieure à celle du point d'intensité maximum dudit premier faisceau lumineux. Notamment selon l'invention, l'intensité du point d'intensité maximum du deuxième faisceau lumineux est au moins trente fois, préférentiellement au moins trente-trois fois, inférieure à celle du point d'intensité maximum du premier faisceau lumineux. Ceci est particulièrement avantageux pour réaliser une fonction d'éclairage de la route avec le premier faisceau et une fonction de signalisation avec le deuxième faisceau.

Selon une réalisation de l'invention, la pièce d'étalement est agencée de manière à répartir les rayons émis par la ou les source(s) lumineuse(s) secondaire(s) sur la majorité de la surface réfléchissante du réflecteur, voire sur l'ensemble de la surface réfléchissante du réflecteur. Le deuxième faisceau lumineux est ainsi davantage adapté à un faisceau de signalisation avec une répartition non concentré, en particulier un faisceau DRL.

Différentes pièces d'étalement peuvent être utilisées. Par exemple, il est possible d'utiliser une lentille sphérique, de préférence placée très proche des sources lumineuses secondaires, de manière à étaler les rayons émis par la source de lumière autour de son axe global d'émission (ou direction globale d'émission), notamment dans le cas d'une diode électroluminescente, encore appelée DEL ou LED.

Cependant, de manière surprenante, les inventeurs se sont aperçu que l'utilisation d'un écran de diffusion en guise de pièce d'étalement était particulièrement efficace. En principe dans l'art antérieur, les écrans de diffusion sont utilisés pour des aspects de surfaces éclairantes, notamment en éclairage intérieur, et non pour remplir des critères de photométrie de faisceaux, notamment de faisceau de signalisation. Il n'était donc pas évident d'utiliser ces écrans de diffusion en guise de pièce d'étalement. Ainsi, selon une réalisation de l'invention, la pièce d'étalement est un écran de diffusion des rayons qui le traversent. Contrairement à d'autres pièces d'étalement, notamment une sphère, un écran de diffusion a une forme simple, est facile à réaliser et d'un coût modique.

Selon une réalisation de l'invention, ladite pièce d'étalement présente une face d'entrée des rayons et une face de sortie des rayons, cette face de sortie et/ou cette face d'entrée présentant des aspérités, permettant de diffuser les rayons lumineux. Par exemple, cette surface peut être grainée. On a ainsi un écran de diffusion obtenu de manière simple en grainant, par exemple par sablage, sa face de sortie et/ou sa face d'entrée. On peut également utiliser un matériau comprenant des particules permettant la diffusion des rayons qui les rencontrent.

Selon une réalisation de l'invention, ladite pièce d'étalement présente une face d'entrée des rayons et une face de sortie des rayons, l'espace entre ces deux faces définissant une épaisseur de ladite pièce d'étalement, les rayons traversant ladite pièce d'étalement selon cette épaisseur. En particulier, il n'y a pas de réflexion interne entre la face d'entrée et la face de sortie. La conception de la pièce d'étalement est donc simple, notamment dans le cas d'un écran de diffusion.

Selon une réalisation de l'invention, la distance entre la face émettrice de la source lumineuse secondaire et la face d'entrée de l'écran est comprise entre 0,3 et 1 mm, préférentiellement entre 0,3 et 0,7 mm.

Selon une réalisation de l'invention, lesdites faces d'entrée et de sortie sont planes. La conception de la pièce d'étalement est davantage simplifiée, notamment dans le cas d'un écran de diffusion, où une simple plaque est utilisable pour être traversée par les rayons.

Selon une réalisation de l'invention la pièce d'étalement est un écran de diffusion d'une épaisseur inférieure à 3 millimètres (mm), préférentiellement à 2 mm, par exemple 1 mm.

Selon une réalisation de l'invention, l'écran de diffusion forme un pont avec des piles, le logement des sources lumineuses secondaires étant ménagé entre ces piles. Ces piles peuvent ainsi être fixées sur un support, définissant ainsi par leur hauteur la distance entre la face d'entrée de l'écran de diffusion et la surface émettrice des sources lumineuses secondaires, pour des sources lumineuses secondaires d'une taille donnée, et éventuellement un circuit imprimé d'une taille donnée. Ces piles peuvent avoir toute la largeur de l'écran de diffusion, cette forme étant très facile à réaliser par moulage.

Selon l'invention, ladite pièce d'étalement est agencée de manière à ce que la majorité des rayons émis par la source lumineuse principale ne rencontrent pas ladite pièce d'étalement. On conserve ainsi un faisceau d'éclairage de la route concentré, ce qui est particulièrement avantageux lorsque le premier faisceau est un faisceau route. On réalise l'invention de manière à ce que ladite pièce d'étalement présente une découpe, agencée de telle sorte que les rayons émis par la source lumineuse principale atteignent directement le réflecteur en passant au niveau de cette découpe. Par exemple, la pièce d'étalement peut contourner la source lumineuse principale et être en vis-à-vis de la ou des source(s) secondaire(s).

Selon une réalisation de l'invention, cette découpe présente des bords évasés dans la direction correspondant à la direction globale d'émission de la source lumineuse principale, les bords s'éloignant de plus en plus selon le sens d'émission de la source lumineuse principale. Ceci permet de diminuer le risque d'interférence de rayons émis par la source lumineuse principale avec la pièce d'étalement.

Selon une réalisation de l'invention, le module comprend plusieurs sources lumineuses secondaires réparties de part et d'autre de la source lumineuse principale.

Selon une réalisation de l'invention, la pièce d'étalement présente deux branches en vis-à-vis des sources lumineuses secondaires, la source lumineuse principale étant située entre les deux branches. Par exemple, la pièce d'étalement peut être en forme de U.

Selon une réalisation de l'invention, la pièce d'étalement présente un logement dans lequel est(sont) placée(s) la ou les source(s) lumineuse(s) secondaire(s). On minimise ainsi l'encombrement. Cela permet également de positionner plus facilement la pièce d'étalement, la précision dans le positionnement de la pièce d'étalement pour collecter l'ensemble des rayons étant moins importante.

Selon une réalisation de l'invention, le module comprend un circuit imprimé sur lequel sont fixées la source lumineuse principale et la ou les source(s) lumineuse(s) secondaire(s), ledit circuit imprimé étant à l'intérieur dudit logement. L'intégration de ces éléments est ainsi simplifiée.

Selon une réalisation de l'invention, le module comprend un support auquel sont fixées les sources lumineuses, soit directement, soit via un circuit imprimé.

Selon une réalisation de l'invention, la pièce d'étalement est fixée audit support.

Selon une réalisation de l'invention, le support est fixé au réflecteur.

Selon une réalisation de l'invention, le support est un radiateur.

La présente invention est particulièrement bien adaptée aux diodes électroluminescentes. Ainsi selon une réalisation de l'invention :
- la source lumineuse principale est constituée d'une diode électroluminescente principale, et/ou
- la ou chaque source lumineuse secondaire est constituée d'une diode électroluminescente secondaire.

Selon une réalisation de l'invention, la diode électroluminescente principale et la ou les diode(s) électroluminescente(s) secondaire(s) sont inscrites dans un même plan horizontal.

Selon une réalisation de l'invention, le réflecteur est divisé en secteurs paraboliques, notamment verticaux.

Un autre objet de l'invention est un projecteur de véhicule, comprenant un module selon l'une quelconque des revendications précédentes.

D'autres caractéristiques et avantages de l'invention apparaîtront à la lecture de la description détaillée qui suit, pour la compréhension de laquelle on se reportera aux dessins annexés, dans lesquels :
- La figure 1 illustre un module d'émission de lumière selon l'invention,
- La figure 2 est une vue de face du module d'émission de lumière de la figure 1, mais dans laquelle la pièce de support des sources de lumières n'est pas représentée,
- La figure 3 est une vue agrandie d'une partie de la figure 2,
- La figure 4 est une vue en contre-plongée de la figure 1,
- La figure 5 est une vue de dessous de l'élément d'étalement et des sources de lumière,
- La figure 6 illustre un projecteur selon l'invention,
- La figure 7 illustre un ensemble de courbes isolux sur un écran transversal placé devant le véhicule, représentant schématiquement le premier faisceau,
- La figure 8 illustre un ensemble de courbes isolux sur un écran transversal placé devant le véhicule, représentant schématiquement le deuxième faisceau,

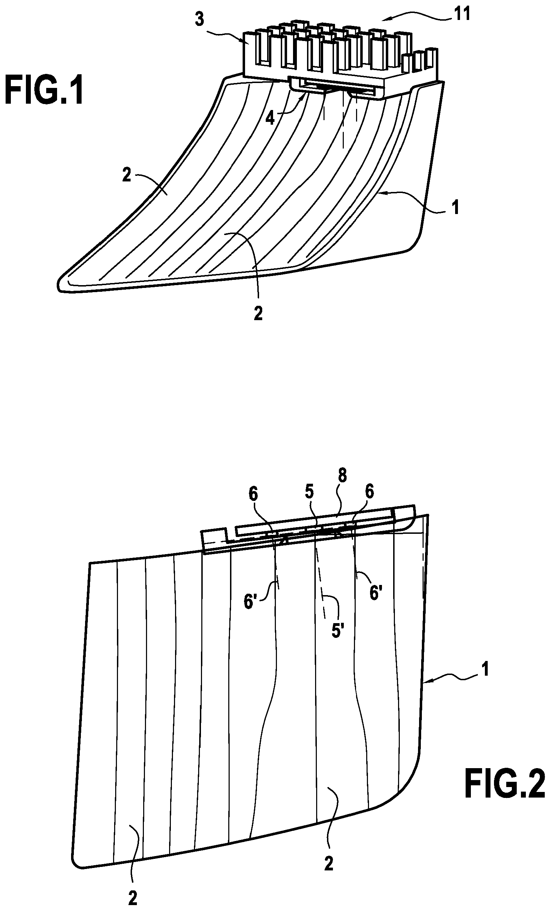

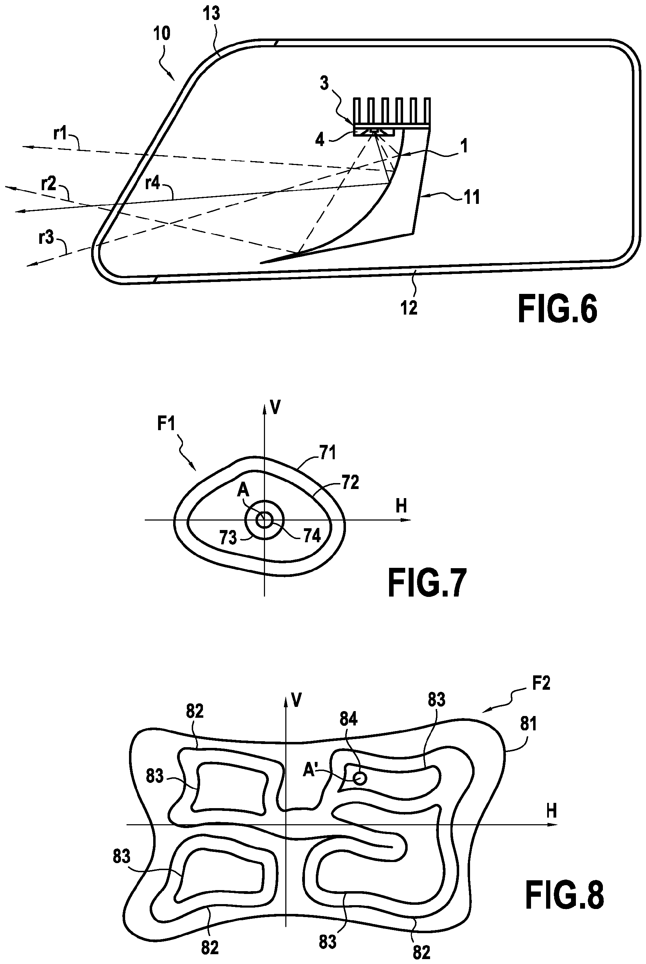

Les figures 1 et 2, illustrent un exemple de réalisation d'un module d'émission de lumière 11 de dispositif d'éclairage et/ou de signalisation d'un véhicule selon l'invention. Sur la figure 6, on a représenté un projecteur de véhicule 10, encore appelé phare, comprenant un boîtier 12 fermé par une glace transparente 13, à l'intérieur duquel le module 11 est placé. Ce module comprend :
- un réflecteur 1 ayant un foyer tel que les rayons lumineux partant de ce foyer et réfléchis par ce réflecteur sont parallèles entre eux,
- une source lumineuse principale 5 placée au foyer du réflecteur 1 et agencée avec le réflecteur de manière à ce que les rayons r4 qu'elle émet soient réfléchis par le réflecteur 1, de manière à former un premier faisceau lumineux F1 présentant un point d'intensité maximum A,
- deux sources lumineuses secondaires 6 placée à distance du foyer du réflecteur 1,
- une pièce d'étalement 4 apte à être traversée par la lumière et à étaler les rayons r1, r2, r3 qui la traversent, positionnée entre les sources lumineuses secondaires 6 et le réflecteur,
le réflecteur 1, les sources lumineuses secondaires 6 et ladite pièce étant agencés de manière à ce que les rayons r1, r2 et r3 émis par les sources lumineuses secondaires 6 traversent ladite pièce d'étalement 4, puis sont réfléchis par le réflecteur 1, de manière à former un deuxième faisceau lumineux F2.

Ainsi lorsque seule la LED principale 5 est allumée, on obtient le premier faisceau F1, tel qu'illustré en figure 7. La figure 7 représente de manière schématique une projection de ce faisceau F1 sur un écran transversal placé devant le véhicule, notamment à 25 mètres, avec des courbes isolux 71, 72, 73 et 74, du faisceau joignant les points d'égale intensité. Dans cet exemple, il s'agit d'un faisceau route, destiné à éclairer la route lorsqu'aucun véhicule ne vient en face. La portée de ce type de faisceau est généralement de 600 mètres. Il s'agit d'un faisceau très concentré. Ce faisceau F1 présente un point dont l'intensité est supérieure à celle des autres points du faisceau. Il s'agit du point d'intensité maximale A. Généralement, pour un faisceau route celui-ci est de 40500 Cd. Ce point est globalement centré selon l'axe du véhicule au niveau de l'horizon, pour avoir un maximum d'intensité devant le véhicule et éclairer loin devant dans cette direction. L'intensité du faisceau F1 baisse ensuite au fur et à mesure que l'on s'écarte de ce point. L'isolux 71 le plus externe sur cette figure est donc celui d'intensité la plus faible.

Lorsque la source lumineuse principale 5 est éteinte et les sources lumineuses secondaires 6 sont allumées, on obtient le deuxième faisceau F2, tel qu'illustré en figure 8. La figure 8 représente de manière schématique une projection de ce faisceau F2 sur un écran transversal placé devant le véhicule, notamment à 25 mètres, avec des courbes isolux 81, 82, 83 et 84. Dans cet exemple, il s'agit d'un faisceau DRL, destiné à signaler la position du véhicule lorsque celui-ci circule de jour. L'intensité de ce faisceau est plus faible. Egalement, comme le but est d'être vu depuis de nombreuses directions par rapport au véhicule, la répartition lumineuse de ce faisceau F2 est beaucoup plus étalée que celle du premier faisceau F1, comme on peut l'observer en figure 8. Ce faisceau F2 présente également un point d'intensité maximale A', dont l'intensité est supérieure à celle des autres points du faisceau.

L'intensité du point d'intensité maximum A' du deuxième faisceau lumineux F2 est inférieure à celle du point d'intensité maximum A du premier faisceau F1, de préférence au moins trente-trois fois inférieure à celle du point d'intensité maximum A du premier faisceau F1.

Dans l'exemple illustré, la pièce d'étalement est un écran de diffusion 4. Celui-ci comprend une face d'entrée située en vis-à-vis des sources lumineuses secondaires 6. Les rayons r1, r2 et r3 que ces dernières émettent traversent la face d'entrée pour entrer dans l'écran de diffusion 4, puis ressortent par sa face de sortie, pour atteindre ensuite la surface réfléchissante du réflecteur 1.

Lorsque l'on effectue les mesures d'un module selon l'invention dont on a enlevé l'écran de diffusion 4, on obtient une photométrie dont la forme de la répartition lumineuse est proche de celle de la figure 8, mais avec un point d'intensité maximale d'une intensité de l'ordre de 5000 candelas. Comme les sources lumineuses secondaires 6 sont défocalisées, le faisceau est moins concentré qu'avec la source lumineuse principale 5, mais son point d'intensité maximale reste fort. Ceci est dû au fait que le réflecteur 1 est conçu pour réaliser un faisceau route avec une source lumineuse à son foyer.

En revanche en ajoutant un écran de diffusion 4 selon l'invention, on conserve la forme de la répartition lumineuse, mais on réussit à descendre cette intensité à 2500 candelas, et même à 1200 candelas, ce qui est idéal pour une fonction DRL.

Pour améliorer l'aspect de diffusion, il est possible de jouer sur différents facteurs, en particulier l'épaisseur de l'écran de diffusion 4, le traitement de surface, l'écartement entre la surface émettrice de lumière de la source lumineuse 6 et l'écran de diffusion 4, ainsi que la nature du matériau de l'écran de diffusion.

Ainsi en augmentant l'épaisseur de l'écran de diffusion 4, on diminue l'intensité du point d'intensité maximum A'.

Une façon d'obtenir un écran de diffusion 4 est de rendre sa face de sortie 48 et/ou sa surface d'entrée diffusante, en générant des aspérités sur celle-ci. Par exemple, on peut obtenir une face de sortie grainée par sablage. On peut également générer des aspérités par impacts laser. En augmentant la fréquence de répartition des aspérités sur la face de sortie 48 et/ou leur profondeur, on va augmenter la diffusion et diminuer ainsi l'intensité du point d'intensité maximum A' du deuxième faisceau F2. On améliorera également l'homogénéisation du deuxième faisceau F2.

Par exemple, dans le cas d'un grainage, l'augmentation ou la diminution de la profondeur des aspérités peut être obtenue respectivement en augmentant ou en diminuant la taille du grain de sable pour réaliser le sablage. On peut également augmenter le nombre de passages de l'écran au sablage, ce qui augmente la fréquence de répétition des aspérités sur l'écran de diffusion ainsi que leur profondeur.

Bien que la réalisation d'aspérités par traitement de surface génère une opération en plus dans la réalisation de l'écran de diffusion, ce sont cependant des méthodes faciles à mettre en œuvre. De plus, elles sont moins couteuses en terme de matière et entraîne moins de perte d'efficacité au niveau du flux lumineux que le fait d'augmenter l'épaisseur de l'écran de diffusion.

Il est également possible d'augmenter la diffusion en augmentant la distance entre la face d'entrée de l'écran de diffusion 4 et la surface émettrice de la source lumineuse secondaire 6. Néanmoins, il y a alors plus de risque d'interférer avec les rayons de la source lumineuse principale 5.

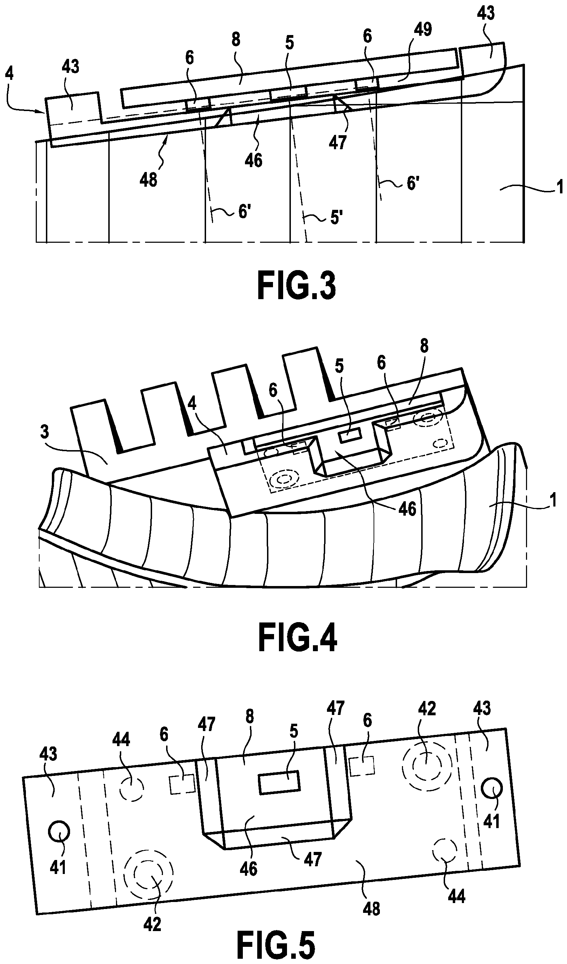

Ainsi dans l'exemple illustré, il a été choisi une réalisation simple où l'écran de diffusion 4 a des faces d'entrée et de sortie 48 planes, la face de sortie et la face d'entrée étant grainées. L'écran de diffusion 4 est une plaque mince de 1 millimètre supportée par un radiateur 3. Les sources lumineuses secondaires sont des diodes électroluminescentes, appelées ci-après diodes électroluminescentes secondaires 6. L'écran de diffusion 4 présente un logement 49 dans lequel sont placées les diodes électroluminescentes secondaires 6. Comme illustré en figure 3, cela permet d'avoir des surfaces émettrices de l'élément photoémetteur des diodes électroluminescentes secondaires 6 proches de la surface d'entrée de l'écran de diffusion 4. On a donc une pièce d'étalement 4 facilement réalisable, assurant une répartition large des rayons r1, r2 et r3 émis par les diodes électroluminescentes secondaires 6 sur la surface réfléchissante du réflecteur 1, voire sur l'ensemble de cette surface.

Les diodes électroluminescentes secondaires 6 sont fixées et connectées électriquement à un circuit imprimé 8. Dans l'exemple illustré, ce circuit imprimé 8 est à l'intérieur dudit logement 49. L'encombrement est faible. Le circuit imprimé 8 est également directement fixé sur le radiateur 3. La fixation des diodes électroluminescentes secondaires 6 et de l'écran de diffusion 4 l'un par rapport à l'autre est donc simple.

Sur la figure 3, on observe en pointillés les axes globaux d'émission 6' des diodes électroluminescentes secondaires 6. Le faisceau lumineux émis par ces LED est globalement conique et réparti autour de cet axe global d'émission 6'. On peut voir que cet axe 6' est perpendiculaire aux faces d'entrées et de sortie 48 de l'écran de diffusion 4. L'espace entre ces deux faces définit une épaisseur de l'écran de diffusion 4, les rayons r1, r2 et r3 traversant l'écran de diffusion 4 selon cette épaisseur. Dans l'exemple illustré, il y a une distance de 0.3 mm entre la face émettrice de la LED secondaire 6 et la face d'entrée de l'écran.

Cette forme simple de réalisation de la pièce d'étalement 4, permet une réalisation simple du module 11, car elle ne requiert pas beaucoup de précision dans la fixation de la pièce d'étalement 4 par rapport aux diodes électroluminescentes secondaires 6.

La source lumineuse principale 5 est également une diode électroluminescente, ci-après appelée diode électroluminescente principale 5. Celle-ci est également fixée sur la carte de circuit imprimée 8.

Afin de perturber le moins possible la génération du faisceau route F1, l'écran de diffusion 4 est agencé de manière à ce que la majorité des rayons émis par la diode électroluminescente principale 5 ne rencontrent pas ladite pièce d'étalement 4. Pour cela, dans cet exemple et tel que représenté aux figures 3 à 5, la plaque de l'écran de diffusion est découpée de sorte que la découpe correspondante 46 forme un décrochement autour de la diode électroluminescente principale 5. Ainsi les rayons r4 émis par la diode électroluminescente principale 5 atteignent directement le réflecteur 1 en passant au niveau de cette découpe 46, sans traverser l'écran de diffusion 4.

La découpe 46 présente des bords évasés 47 dans la direction correspondant à la direction globale d'émission 5' de la source lumineuse principale 5, les bords s'éloignant de plus en plus selon le sens d'émission de la source lumineuse principale 5. Autrement dit l'ouverture réalisée par la découpe dans l'écran de diffusion 4 s'évase vers le réflecteur. Le cône de lumière généré par la diode électroluminescente principale 5 est moins perturbé.

Ainsi, la découpe 46 est une forme simple de réalisation de l'écran de diffusion. Elle peut être large par rapport à la taille de la diode électroluminescente principale 5, ce qui permet également une réalisation simple du module d'émission de lumière 11. En effet, cette réalisation ne requiert pas beaucoup de précision dans la fixation de la pièce d'étalement 4 par rapport à la diode électroluminescente principale 5. Ceci est renforcé lorsque les bords 47 de la découpe s'évasent vers le réflecteur 1.

Dans l'exemple illustré, les diodes électroluminescentes secondaires 6 sont réparties de part et d'autre de la diode électroluminescente principale 5. L'écran de diffusion 4 avec sa découpe 46 forme une sorte de U dans un plan parallèle au circuit imprimé 8, avec deux branches en vis-à-vis des sources lumineuses secondaires 6, la source lumineuse principale 5 étant située entre les deux branches. C'est donc une pièce de forme très simple permettant de diffuser seulement les rayons émis par les diodes électroluminescentes secondaires 6.

Ici l'écran de diffusion forme une sorte de pont avec deux piles 43, le logement 49 étant ménagé entre ces piles. Elles font toute la largeur de l'écran de diffusion. Cette forme est très facile à réaliser par moulage. Les piles 43 sont fixées sur le radiateur 3, par exemple au moyen de vis (non représentées), passant au travers d'orifice 41 traversant ces piles 43 et débouchant dans des orifices correspondant du radiateur 3. La hauteur de ces piles 43 définit ainsi la distance entre la face d'entrée de l'écran de diffusion 4 et la surface émettrice des diodes électroluminescentes secondaires 6, pour des diodes électroluminescentes secondaires 6 d'une taille donnée et un circuit imprimé 8 d'une taille donnée.

En figure 5, on peut également observer des orifices de positionnement 44 du circuit imprimé 8. Le radiateur 3 comporte des tenons (non représentées) aptes à être insérés dans ces orifices 44. Cela permet de positionner facilement les LEDs 5 et 6 par rapport sur le radiateur 3. Des orifices de fixation 42 du circuit imprimé 8 correspondent également avec des orifices de fixation du radiateur 3, permettant ainsi de fixer les LEDs 5 et 6 sur le radiateur 3. Le radiateur 3 est fixé au réflecteur 1 de manière classique, de manière à positionner la diode électroluminescente principale 5 au foyer du réflecteur 1.

Le réflecteur 1 est ici divisé en plusieurs secteurs paraboliques verticaux.

## Revendications

1. Module d'émission de lumière (11) de dispositif d'éclairage et/ou de signalisation d'un véhicule, comprenant :
- un réflecteur (1) ayant un foyer,
- une source lumineuse principale (5) placée au foyer du réflecteur et agencée avec le réflecteur de manière à ce que les rayons (r4) qu'elle émet soient réfléchis par le réflecteur, de manière à former un premier faisceau lumineux (F1) présentant un point d'intensité maximum (A),
- au moins une source lumineuse secondaire (6) placée à distance du foyer du réflecteur,
- une pièce d'étalement (4) apte à être traversée par la lumière et à étaler les rayons qui la traversent, positionnée entre la ou les source(s) lumineuse(s) secondaire(s) (6) et le réflecteur,
le réflecteur (1), la ou les source(s) lumineuse(s) secondaire(s) (6) et ladite pièce étant agencés de manière à ce que les rayons (r1, r2 et r3) émis par la ou les source(s) lumineuse(s) secondaire(s) (6) traversent ladite pièce d'étalement (4) puis soient réfléchis par le réflecteur, de manière à former un deuxième faisceau lumineux (F2), le deuxième faisceau lumineux (F2) présentant un point d'intensité maximum donné (A') dont l'intensité est inférieure à celle du point d'intensité maximum (A) dudit premier faisceau (F1),
l'intensité du point d'intensité maximum (A') du deuxième faisceau lumineux (F2) étant au moins trente fois inférieure à celle du point d'intensité maximum (A) dudit premier faisceau (F1),
ladite pièce d'étalement (4) étant agencée de manière à ce que la majorité des rayons émis par la source lumineuse principale (5) ne rencontrent pas ladite pièce d'étalement (4),
**caractérisé en ce que** la pièce d'étalement (4) présente une découpe (46) agencée de telle sorte que les rayons (r4) émis par la source lumineuse principale (5) atteignent directement le réflecteur (1) en passant au niveau de cette découpe.

2. Module selon la revendication 1, dans lequel la surface réfléchissante du réflecteur est telle que les rayons lumineux partant de ce foyer et réfléchis par ce réflecteur sont contenus dans des plans parallèles entre eux.

3. Module selon l'une quelconque des revendications 1 à 2, dans lequel la pièce d'étalement (4) est agencée de manière à répartir les rayons (r1, r2 et r3) émis par la ou les source(s) lumineuse(s) secondaire(s) (6) sur l'ensemble de la surface réfléchissante du réflecteur (1).

4. Module selon l'une quelconque des revendications précédentes, dans lequel ladite pièce d'étalement (4) est un écran de diffusion des rayons (r1, r2 et r3) qui le traversent.

5. Module selon la revendication 4, dans lequel ladite pièce d'étalement (4) présente une face d'entrée des rayons et une face de sortie (48) des rayons, ladite face d'entrée des rayons et/ou ladite face de sortie (48) étant grainée(s).

6. Module selon la revendication 4 ou 5, dans lequel ladite pièce d'étalement (4) présente une face d'entrée des rayons et une face de sortie des rayons (48), l'espace entre ces deux faces définissant une épaisseur de ladite pièce d'étalement (4), les rayons (r1, r2 et r3) traversant ladite pièce d'étalement (4) selon cette épaisseur.

7. Module selon l'une des revendications précédentes, dans lequel ladite pièce d'étalement (4) présente deux branches en vis-à-vis des sources lumineuses secondaires (6), la source lumineuse principale (5) étant située entre les deux branches.

8. Module selon l'une des revendications précédentes, dans lequel ladite pièce d'étalement (4) présente un logement (49) dans lequel est(sont) placée(s) la ou les source(s) lumineuse(s) secondaire(s) (6).

9. Module selon la revendication 8, comprenant un circuit imprimé sur lequel est fixé la source lumineuse principale (5) et la ou les source(s) lumineuse(s) secondaire(s) (6), ledit circuit imprimé étant à l'intérieur dudit logement (49).

10. Module selon l'une des revendications précédentes, comprenant un support (3) auquel sont fixées les sources lumineuses (5 et 6) soit directement soit via un circuit imprimé, ladite pièce d'étalement (4) étant fixée audit support (3).

11. Module selon l'une quelconque des revendications précédentes, dans lequel :
- la source lumineuse principale (5) est constituée d'une diode électroluminescente principale (5), et/ou
- la ou chaque source lumineuse secondaire (6) est constituée d'une diode électroluminescente secondaire (6).

12. Module selon l'une quelconque des revendications précédentes, dans lequel le premier faisceau (F1) est un faisceau route et le deuxième faisceau (F2) est un faisceau de position diurne.

13. Projecteur de véhicule, comprenant un module (11) selon l'une quelconque des revendications précédentes.

## Patentansprüche

1. Lichtemissionsmodul (11) einer Beleuchtungs- und/oder Signalisierungsvorrichtung für ein Kraftfahrzeug, umfassend:
- einen Reflektor (1), der einen Brennpunkt besitzt,
- eine Hauptlichtquelle (5), die im Brennpunkt des Reflektors platziert ist und mit dem Reflektor so angeordnet ist, dass die von ihr emittierten Strahlen (r4) vom Reflektor so reflektiert werden, dass ein erstes Lichtbündel (F1) gebildet wird, das einen Punkt maximaler Intensität (A) aufweist,
- mindestens eine Nebenlichtquelle (6), die vom Brennpunkt des Reflektors beabstandet platziert ist,
- ein Auffächerungsstück (4), das geeignet ist, von dem Licht durchquert zu werden und die es durchquerenden Strahlen aufzufächern, und das zwischen der oder den Nebenlichtquellen(n) (6) und dem Reflektor positioniert ist,
wobei der Reflektor (1), die Nebenlichtquelle(n) (6) und das Stück so angeordnet sind, dass die von der oder den Nebenlichtquelle (n) (6) emittierten Strahlen (r1, r2 und r3) das Auffächerungsstück (4) durchqueren, dann von dem Reflektor so reflektiert werden, dass ein zweites Lichtbündel (F2) gebildet wird, wobei das zweite Lichtbündel (F2) einen gegebenen Punkt maximaler Intensität (A') aufweist, dessen Intensität geringer als die des Punktes maximaler Intensität (A) des ersten Bündels (F1) ist,
wobei die Intensität des Punktes maximaler Intensität (A') des zweiten Lichtbündels (F2) mindestens dreißig Mal geringer als die des Punktes maximaler Intensität (A) des ersten Bündels (F1) ist,
wobei das Auffächerungsstück (4) so angeordnet ist, dass die Mehrheit der von der Hauptlichtquelle (5) emittierten Strahlen das Auffächerungsstück (4) nicht trifft,
**dadurch gekennzeichnet, dass** das Auffächerungsstück (4) einen Ausschnitt (46) aufweist, der so angeordnet ist, dass die von der Hauptlichtquelle (5) emittierten Strahlen (r4) den Reflektor (1) direkt erreichen, indem sie auf Höhe dieses Ausschnitts verlaufen.

2. Modul nach Anspruch 1, bei dem die reflektierende Oberfläche des Reflektors dergestalt ist, dass die von diesem Brennpunkt ausgehenden und von diesem Reflektor reflektierten Lichtstrahlen in parallel zueinander verlaufenden Ebenen enthalten sind.

3. Modul nach einem der Ansprüche 1 bis 2, bei dem das Auffächerungsstück (4) so angeordnet ist, dass die von der oder den Nebenlichtquelle(n) (6) emittierten Strahlen (r1, r2 und r3) so verteilt werden, auf der gesamten reflektierenden Oberfläche des Reflektors (1) verteilt werden.

4. Modul nach einem der vorhergehenden Ansprüche, bei dem das Auffächerungsstück (4) ein Streuschirm für die es durchquerenden Strahlen (r1, r2 und r3) ist.

5. Modul nach Anspruch 4, bei dem das Auffächerungsstück (4) eine Eintrittsseite für die Strahlen und eine Austrittsseite (48) für die Strahlen aufweist, wobei die Eintrittsseite für die Strahlen und/oder die Austrittsseite (48) gekörnt ist(sind).

6. Modul nach Anspruch 4 oder 5, bei dem das Auffächerungsstück (4) eine Eintrittsseite für die Strahlen und eine Austrittsseite für die Strahlen (48) aufweist, wobei der Raum zwischen diesen beiden Seiten eine Dicke des Auffächerungsstücks (4) definiert, wobei die Strahlen (r1, r2 und r3) das Auffächerungsstück (4) entlang dieser Dicke durchqueren.

7. Modul nach einem der vorhergehenden Ansprüche, wobei das Auffächerungsstück (4) zwei Schenkel gegenüber den Nebenlichtquellen (6) aufweist, wobei die Hauptlichtquelle (5) zwischen den beiden Schenkeln gelegen ist.

8. Modul nach einem der vorhergehenden Ansprüche, wobei das Auffächerungsstück (4) eine Aufnahme (49) aufweist, in der die Nebenlichtquelle(n) (6) angeordnet ist (sind) .

9. Modul nach Anspruch 8, umfassend eine Leiterplatte, auf der die Hauptlichtquelle (5) und die Nebenlichtquelle(n) (6) befestigt sind, wobei sich die Leiterplatte im Inneren der Aufnahme (49) befindet.

10. Modul nach einem der vorhergehenden Ansprüche, umfassend einen Träger (3), an dem die Lichtquellen (5 und 6) entweder direkt oder über eine Leiterplatte befestigt sind, wobei das Auffächerungsstück (4) an dem Träger (3) befestigt ist.

11. Modul nach einem der vorhergehenden Ansprüche, bei dem:
- die Hauptlichtquelle (5) aus einer Hauptleuchtdiode (5) besteht und/oder
- die oder jede Nebenlichtquelle (6) aus einer Nebenleuchtdiode (6) besteht.

12. Modul nach einem der vorhergehenden Ansprüche, bei dem das erste Lichtbündel (F1) ein Fernlicht ist und das zweite Lichtbündel (F2) ein Tagfahrlicht ist.

13. Fahrzeugscheinwerfer mit einem Modul (11) nach einem der vorhergehenden Ansprüche.

## Claims

1. Light emitting module (11) of a lighting and/or signalling device of a vehicle, comprising :
- a reflector (1) having a focal point,
- a main light source (5) placed at the focal point of the reflector and arranged with the reflector so that the rays (r4) which it emits are reflected by the reflector so as to form a first light beam (F1) having a point of maximum intensity (A),
- at least one secondary light source (6) placed at a distance from the focal point of the reflector,
- a spreading piece (4) capable of being traversed by the light and of spreading the rays that pass through it, positioned between the secondary light source(s) (6) and the reflector,
the reflector (1), the secondary light source(s) (6) and said part being arranged so that the rays (r1, r2 and r3) emitted by the secondary light source(s) (6) pass through said spreading part (4) and are then reflected by the reflector, so as to form a second light beam (F2), the second light beam (F2) having a given point of maximum intensity (A') whose intensity is lower than that of the point of maximum intensity (A) of said first beam (F1),
the intensity of the point of maximum intensity (A') of the second light beam (F2) being at least thirty times lower than that of the point of maximum intensity (A) of said first beam (F1),
said spreading piece (4) being arranged such that the majority of the rays emitted by the main light source (5) do not encounter said spreading piece (4),
**characterized in that** the spreading piece (4) has a cutout (46) arranged in such a way that the rays (r4) emitted by the main light source (5) reach the reflector (1) directly through this cutout.

2. A module according to claim 1, wherein the reflecting surface of the reflector is such that the light rays emanating from this focal point and reflected by this reflector are contained in planes parallel to each other.

3. A module according to any one of claims 1 to 2, wherein the spreading piece (4) is arranged to distribute the rays (r1, r2 and r3) emitted by the secondary light source(s) (6) over the entire reflecting surface of the reflector (1).

4. A module according to any one of the preceding claims, wherein said spreading piece (4) is a screen for scattering the rays (r1, r2 and r3) passing through it.

5. A module according to claim 4, wherein said spreading piece (4) has a rays entrance face and a rays exit face (48), said entrance face and/or said exit face (48) being grained.

6. A module according to claim 4 or 5, wherein said spreading piece (4) has a rays entrance face and a rays exit face (48), the space between these two faces defining a thickness of said spreading piece (4), the rays (r1, r2 and r3) passing through said spreading piece (4) according to this thickness.

7. A module according to one of the preceding claims, wherein said spreading piece (4) has two branches facing the secondary light sources (6), the main light source (5) being located between the two branches.

8. A module according to one of the preceding claims, wherein said spreading piece (4) has a housing (49) in which the secondary light source(s) (6) is/are placed.

9. A module according to claim 8, comprising a printed circuit on which is fixed the main light source (5) and the secondary light source(s) (6), said printed circuit being inside said housing (49).

10. A module according to one of the preceding claims, comprising a support (3) to which the light sources (5 and 6) are fixed either directly or via a printed circuit, said spreading piece (4) being fixed to said support (3).

11. A module according to any one of the preceding claims, wherein :
- the main light source (5) consists of a main light-emitting diode (5), and/or
- the or each secondary light source (6) consists of a secondary light-emitting diode (6).

12. A module according to any one of the preceding claims, wherein the first beam (F1) is a main beam and the second beam (F2) is a daytime running beam.

13. A vehicle headlamp comprising a module (11) according to any of the preceding claims.
